Europäisches Patentamt

European Patent Office

Office européen des brevets

(19)

(11) Veröffentlichungsnummer : **0 073 976**
**B1**

(12) # EUROPÄISCHE PATENTSCHRIFT

(45) Veröffentlichungstag der Patentschrift :
28.11.84

(21) Anmeldenummer : 82107516.5

(22) Anmeldetag : 18.08.82

(51) Int. Cl.³ : **B 01 D 53/14, C 10 K 1/14**

(54) **Verfahren zum Auswaschen saurer Gase aus Gasgemischen.**

(30) Priorität : **04.09.81 DE 3135160**

(43) Veröffentlichungstag der Anmeldung :
**16.03.83 Patentblatt 83/11**

(45) Bekanntmachung des Hinweises auf die Patenterteilung : **28.11.84 Patentblatt 84/48**

(84) Benannte Vertragsstaaten :
**AT BE DE FR GB IT NL**

(56) Entgegenhaltungen :
**DE-A- 2 024 020**
**DE-A- 2 746 913**

(73) Patentinhaber : **Linde Aktiengesellschaft**
**Abraham-Lincoln-Strasse 21**
**D-6200 Wiesbaden (DE)**

(72) Erfinder : **Köhler, Peter, Dr. Dipl.-Ing.**
**D-8011 Siegertsbrunn**
**D-8011 Siegertsbrunn (DE)**
Erfinder : **Lassmann, Eberhard Dr. rer. nat.**
**Dipl.-Chem.**
**Baierbach 6**
**D-8191 Eurasburg (DE)**
Erfinder : **Hader, Horst**
**Rupprechtstrasse 21**
**D-8000 München 19 (DE)**
Erfinder : **Richter, Uwe**
**Tölzer Strasse 43**
**D-8000 München 70 (DE)**

(74) Vertreter : **Schaefer, Gerhard, Dr.**
**Linde Aktiengesellschaft Zentrale Patentabteilung**
**D-8023 Höllriegelskreuth (DE)**

EP 0 073 976 B1

## Beschreibung

Die vorliegende Erfindung betrifft ein Verfahren zum Auswaschen saurer Gase, insbesondere Kohlendioxid, aus diese enthaltenden Gasgemischen mittels einer wäßrigen Aminlösung als Waschflüssigkeit.

Es ist bekannt, zum Auswaschen saurer Gase, insbesondere Kohlendioxid, Schwefelwasserstoff oder Kohlenoxisulfid, wäßrige Lösungen von Aminen zu verwenden. So wird beispielsweise in der DE-A-28 39 506 Hexandiamin (HDA) als Waschflüssigkeit genannt. Dieses Waschmittel hat im Vergleich zu beispielsweise Monoäthanolamin (MEA) oder Äthylendiamin (EDA) den Vorteil, nicht korrosiv zu wirken, d. h. es muß kein zusätzlicher Korrosionsinhibitor verwendet werden. Jedoch erfolgt beispielsweise die $CO_2$-Aufnahme bei Verwendung von Hexandiamin im Vergleich zu den genannten Waschflüssigkeiten merklich langsamer.

Aufgabe der vorliegenden Erfindung ist es daher, ein Verfahren bereitzustellen, das es gestattet, das Auswaschen saurer Gase aus Gasgemischen, insbesondere hinsichtlich der auftretenden Korrosionsprobleme und der Absorptionsgeschwindigkeit, besonders wirtschaftlich zu gestalten.

Diese Aufgabe wird erfindungsgemäß dadurch gelöst, daß als Waschflüssigkeit eine wäßrige Lösung von Hexandiamin und Monoäthanolamin verwendet wird.

Die beanspruchte Waschmittelkombination vereint die Vorteile der einzelnen Waschmittel, ohne daß deren Nachteile zur Geltung kommen. So haben Vergleichsmessungen mit MEA und HDA gezeigt, daß bei Verwendung der erfindungsgemäßen Waschmittelkombination bei gleicher Gewichtskonzentration gegenüber reiner MEA-Lösung Korrosionsfreiheit auftritt und gegenüber reiner HDA-Lösung die $CO_2$-Absorption wesentlich schneller erfolgt. Durch diese Waschmittelkombination wird außerdem eine hohe Beladbarkeit und eine gute Endreinheit (50 bis 100 Vppm) an $CO_2$ im gewaschenen Gas bzw. eine Einsparung an Kolonnenböden erreicht. Überdies ist die Waschmittelkombination wenig flüchtig und leicht regenerierbar. Es ergeben sich gegenüber den einzelnen Komponenten sogar Einsparungen an spezifischer Regenerierenergie gemessen in $kcal/Nm^3$ $CO_2$. Auch die umlaufende Waschmittelmenge ist im Vergleich zu reiner HDA- oder MEA-Lösung geringer, wodurch sich Einsparungen an Pumpenenergie und Waschmittelvorwärmung und damit kleinere Wärmetauscher ergeben. Da kein Korrosionsinhibitor verwendet werden muß, entfallen die Kosten hierfür. Außerdem können C-Stähle verwendet werden, die in der Herstellung billiger sind als korrosionsfeste Stähle.

Es hat sich als zweckmäßig erwiesen, daß die Konzentration des Hexandiamins und des Monoäthanolamins in der wäßrigen Lösung 15 bis 60 Gew.-%, vorzugsweise 25 bis 35 Gew.-% beträgt.

Besonders günstig ist es dabei, wenn die Konzentration des Hexandiamins in der wäßrigen Lösung 10 bis 50 Gew.-%, vorzugsweise 20 bis 30 Gew.-%, und die Konzentration des Monoäthanolamins in der wäßrigen Lösung 5 bis 20 Gew.-%, vorzugsweise 7 bis 15 Gew.-%, beträgt.

Das erfindungsgemäße Verfahren läßt sich mit besonderem Vorteil bei der $CO_2$-Entfernung aus Steam-Reforming-Gasen, aus Erdgas vor dessen Verflüssigung oder vor dessen Weitertransport in Pipelines, sowie aus Stadtgas oder Kohlevergasungsgasen einsetzen. Es ist auch speziell zur Reinigung von Gasen geeignet, die auch $H_2S$ und COS enthalten, da kein Korrosionsinhibitor erforderlich ist. Dabei läßt sich eine Endreinheit von 50 bis 100 Vppm $CO_2$ erreichen.

Weitere Vorteile der erfindungsgemäß verwendeten Waschmittelkombination ergeben sich aus zwei Beispielen, die in den Tabellen 1 und 2 zusammengestellt sind.

Die den angegebenen Werten zugrundeliegenden Messungen wurden in einer Füllkörpersäule einer Pilotanlage durchgeführt. Der Kohlendioxidpartialdruck betrug ca. 1,5 bar.

Beispiel 1 bezieht sich auf ein Rohgas mit 24 Vol.-% $CO_2$ bei 76 % Inertbestandteilen, eine Waschmittelmenge von 6 $m^3/h$ und eine Waschmitteltemperatur von 40 °C. Beispiel 2 bezieht sich auf ein Rohgas mit 28 Vol.-% $CO_2$, eine gegenüber Beispiel 1 verringerte Waschmittelmenge von 4,8 $m^3/h$ und eine Waschmitteltemperatur von 50 °C. Alle übrigen Betriebsparameter waren gleich.

Beispiel 1 zeigt, daß bei gleicher Rohgasmenge mit steigendem MEA-Anteil im Waschmittel die erzielbare Gasreinheit um 3,1 Vol.-%, d. h. um 25 % gegenüber den Werten für HDA verbessert werden kann. Gleichzeitig erreicht die Transportkapazität des Waschmittels einen um 4,5 $Nm^3/m^3$ höheren Wert, d. h. es wird 25 % mehr $CO_2$ aufgenommen. Außerdem nimmt die spezifische Regenerierenergie um 350 $Wh/Nm^3$, d. h. um 20 % ab. Die spezifische Regenerierenergie setzt sich dabei aus der Energie zur Strippdampferzeugung und aus dem Reaktionswärmestrom, bezogen auf die stündlich ausgewaschene $CO_2$-Menge zusammen. Dies bedeutet, daß mit der erfindungsgemäßen Waschmittelkombination insbesondere bei 25 Gew.-% HDA und 10 Gew.-% MEA, in Vergleich zu reinem Hexandiamin, die $CO_2$-Aufnahme wesentlich schneller erfolgt. Die mögliche Mehrbeladung des Waschmittels oder dementsprechend eine Einsparung von ca. 25 % an umlaufendem Waschmittel ergibt sich bei gleichbleibender Säulenhöhe mehr aus diesem beschleunigten Stoffübergang als aus der Erhöhung der Gewichtskonzentration. Denn selbstverständlich war bei den Versuchen auch für Hexandiamin noch ein großer Abstand zur Sättigungsbeladung, d. h. genügend freie Aufnahmekapazität im Sumpf der Säule vorhanden. Durch die schnellere Absorption bei gleicher Waschmittelmenge und unveränderter Heizleistung (W) für die Regenerierung wird gleichzeitig die spezifische Regenerierenergie ($Wh/Nm^3$) um 20 % gesenkt.

Auch aus Beispiel 2 ist klar ersichtlich, daß mit steigendem MEA-Anteil im Waschmittel sowohl eine

**0 073 976**

verbesserte Gasreinheit als auch eine höhere Transportkapazität sowie eine verringerte spezifische Regenerierenergie erreicht wird.

Ein Vergleich der Beispiele 1 und 2 zeigt außerdem, daß bei verringerter Waschmittelmenge die untersuchten Waschmittel die Fähigkeit zeigen, mit einer weiteren Erhöhung der Transportkapazität zu reagieren. Dementsprechend kann mit der beanspruchten Waschmittelkombination in einer Wäsche mit großen $CO_2$-Konzentrationen im Rohgas eine deutliche Einsparung an Waschmittelmenge bei gleich guter Reinheit oder bei gleicher Waschmittelmenge eine verbesserte Reinheit und überdies eine verringerte spezifische Regenerierenergie erzielt werden. Überdies kann bei Anwendung einer gleichbleibenden spezifischen Regenerierenergie, d. h. steigender Gesamtregenerierenergie bei steigender $CO_2$-Auswaschung, die Restbeladung der erfindungsgemäßen Waschmittelkombination noch gesenkt und damit die erzielbare Reinheit verbessert und die Transportkapazität vergrößert werden.

(Siehe Tabellen Seite 4 ff.)

3

Tabelle 1

1. Beispiel Verbesserung der Eigenschaften von HDA als Sauergas-Waschmittel durch Zugabe von MEA.

| | HDA 30% | HDA + MEA 25% + 5% | HDA + MEA 25% + 10% | Änderung* | Prozentuale Verbesserung* |
|---|---|---|---|---|---|
| Rohgasmenge (Nm³/h) | 1110 | 1110 | 1110 | - | - |
| Rohgaskonzentration an $CO_2$ in Vol-% | 24 | 24 | 24 | - | - |
| Reingaskonzentration an $CO_2$ in Vol-% | 12,2 | 11,6 | 9,1 | 3,1 | 25% |
| Waschmittelmenge (m³/h) | 6 | 6 | 6 | - | - |
| Transportkapazität (Nm³/m³) | 17,5 | 18,1 | 22 | 4,5 | 25% |
| Spezifische Regenerier-energie (Wh/Nm³) | 1680 | 1550 | 1330 | 350 | 20% |

* Bei der Mischung HDA + MEA, 25 + 10 Gew.-%, gegenüber reiner HDA von 30 Gew.-%.

Tabelle 2

2. Beispiel Verbesserung der Eigenschaften von HDA als Sauergas-Waschmittel durch Zugabe von MEA.

| | HDA 30% | HDA + MEA 25% + 5% | HDA + MEA 25% + 10% | Änderung* | Prozentuale Verbesserung* |
|---|---|---|---|---|---|
| Rohgasmenge ($Nm^3/h$) | 1110 | 1110 | 1110 | – | – |
| Rohgaskonzentration an $CO_2$ in Vol-% | 28 | 28 | 28 | – | – |
| Reingaskonzentration an $CO_2$ in Vol-% | 17,3 | 16,3 | 14,9 | 2,4 | 14% |
| Waschmittelmenge ($m^3/h$) | 4,8 | 4,8 | 4,8 | – | – |
| Transportkapazität ($Nm^3/m^3$) | 21 | 21,8 | 24,5 | 3,5 | 17% |
| Spezifische Regenerier-energie ($Wh/Nm^3$) | 2050 | 1950 | 1750 | 300 | 20% |

* Bei der Mischung HDA + MEA, 25 + 10 Gew.-%, gegenüber reiner HDA von 30 Gew.-%.

0 073 976

**Ansprüche**

1. Verfahren zum Auswaschen saurer Gase, insbesondere Kohlendioxid, aus diese enthaltenden Gasgemischen mittels einer wäßrigen Aminlösung als Waschflüssigkeit, dadurch gekennzeichnet, daß als Waschflüssigkeit eine wäßrige Lösung von Hexandiamin und Monoäthanolamin verwendet wird.

2. Verfahren nach Anspruch 1, dadurch gekennzeichnet, daß die Konzentration des Hexandiamins und des Monoäthanolamins in der wäßrigen Lösung 15 bis 60 Gew.-%, vorzugsweise 25 bis 35 Gew.-%, beträgt.

3. Verfahren nach Anspruch 1 oder 2, dadurch gekennzeichnet, daß die Konzentration des Hexandiamins in der wäßrigen Lösung 10 bis 50 Gew.%, vorzugsweise 20 bis 30 Gew.-%, und die Konzentration des Monoäthanolamins in der wäßrigen Lösung 5 bis 20 Gew.-%, vorzugsweise 7 bis 15 Gew.-%, beträgt.

**Claims**

1. A method for washing acid gases, in particular carbon dioxide, from gas mixtures containing them, using an aqueous amine solution as washing liquid, characterised in that an aqueous solution of hexane diamine and monoethanolamine is used as washing liquide.

2. A method according to Claim 1, characterised in that the concentration of the hexane diamine and the monoethanolamine in the aqueous solution is 15 to 60 % by weight, preferably 25 to 35 % by weight.

3. A method according to Claim 1 or Claim 2, characterized in that the concentration of the hexane diamine in the aqueous solution is 10 to 50 % by weight, preferably 20 to 30 % by weight, and the concentration of the monoethanolamine in the aqueous solution is 5 to 20 % by weight, preferably 7 to 17 % by weight.

**Revendications**

1. Procédé pour extraire par lavage des gaz acides, notamment du gaz carbonique, de mélanges de gaz les contenant, à l'aide d'une solution aqueuse d'amine comme liquide de lavage, caractérisé en ce que l'on utilise comme liquide de lavage une solution aqueuse d'hexanediamine et de monoéthanolamine.

2. Procédé selon la revendication 1, caractérisé en ce que la concentration de l'hexanediamine et de la monoéthanolamine dans la solution aqueuse est comprise entre 15 et 60 % en poids, de préférence entre 25 et 35 % en poids.

3. Procédé selon la revendication 1 ou 2, caractérisé en ce que la concentration de l'hexanediamine dans la solution aqueuse est comprise entre 10 et 50 % en poids, de préférence entre 20 et 30 % en poids, et la concentration de la monoéthanolamine dans la solution aqueuse est comprise entre 5 et 20 % en poids, de préférence entre 7 et 15 % en poids.